# EUROPÄISCHE PATENTSCHRIFT

(11) **EP 2 715 446 B1**
(45) Veröffentlichungstag und Bekanntmachung des Hinweises auf die Patenterteilung: **26.12.2018**
(21) Anmeldenummer: 12721742.0
(22) Anmeldetag: 02.05.2012
(51) Int. Cl.: G03B 29/00, G03B 17/02, G03B 19/02, B60R 11/04, H04N 5/225, B60S 1/08, G06K 9/00

(54) **KAMERASYSTEM FÜR EIN FAHRZEUG**
CAMERA SYSTEM FOR A VEHICLE
SYSTÈME DE CAMÉRA POUR UN VÉHICULE

(30) Priorität: 03.06.2011 DE 102011103302
(43) Veröffentlichungstag der Anmeldung: 09.04.2014
(73) Patentinhaber: Conti Temic Microelectronic GmbH, 90411 Nürnberg (DE)
(72) Erfinder: MÜLLER, Gerhard, 88339 Bad Waldsee (DE)
(86) Internationale Anmeldenummer: PCT/DE2012/100122
(87) Internationale Veröffentlichungsnummer: WO 2012/163341

(56) Entgegenhaltungen:
- EP-A2- 1 580 092
- DE-A1-102006 010 671
- DE-A1-102007 012 993
- US-A1- 2009 085 755
- US-A1- 2010 208 060

## Beschreibung

Die Erfindung betrifft ein Kamerasystem für ein Fahrzeug, das im Fahrzeuginnenraum hinter einer Windschutzscheibe angeordnet ist.

Fahrerassistenzsysteme in Fahrzeugen verwenden häufig eine Kamera zur Erfassung der Fahrzeugumgebung, beispielsweise zur Erkennung verschiedenster Objekte im Umfeld des Fahrzeugs.
Die Kamera ist dabei in der Regel hinter der Windschutzscheibe des Fahrzeugs angeordnet und blickt in Fahrtrichtung durch diese hindurch. Beispiele hierfür sind Fahrzeugkameras zur Erkennung der Fahrbahnmarkierungen, Nachtsichtkameras oder Stereokameras als optische Abstandssensoren.
Neben dem Einbauraum eines solchen Kamerasystems befinden sich typischerweise auch Sensoren zur Regenerkennung oder zur Erkennung der Lichtverhältnisse.

Aus der DE 103 55 205 A1 ist beispielsweise eine Vorrichtung bekannt, zur Befestigung eines Kameramoduls in einem Fahrzeug hinter einer Windschutzscheibe, wobei in einem ersten Einbauraum hinter der Windschutzscheibe ein Kameramodul angeordnet ist, zur Erfassung von Bildern aus dem Vorausbereich vor dem Fahrzeug. Unterhalb des Einbauraums für das Kameramodul ist ein zweiter Einbauraum vorgesehen, für einen Regensensor, dessen Sensorfläche ebenfalls der Windschutzscheibe zugewandt ist.

Nachteilig bei der in der DE 103 55 205 A1 beschriebenen Vorrichtung sowie bei anderen bekannten Vorrichtungen bei denen mehrere Sensoren, insbesondere Kameramodule und Regen- bzw. Lichtsensoren, hinter einer Windschutzscheibe eines Fahrzeugs angeordnet werden, ist ein erhöhter Bedarf an begrenztem Einbauraum, da für jedes Kameramodul und jede Sensoreinheit ein eigener Sichtbereich durch die Windschutzscheibe gebraucht wird.

Es gibt bereits Ansätze mehrere Sensorfunktionen auf ein Kameramodul zu vereinen, beispielsweise mit bifokalen bzw. multifokalen Kameramodulen, d.h. Kameras die gleichzeitig einen Fernbereich und einen Nahbereich auf einem einzelnen Bildaufnahmeelement erfassen können.
Ein solches System ist beispielsweise aus der EP 1 923 280 A1 bekannt. Durch ein zusätzliches optisches Element mit einer positiven Linse (konvexe Linse) wird ein bestehendes Abbildungssystem, welches auf einen optischen Fernbereich fokussiert ist, in die Lage gebracht, zusätzlich eine scharfe Abbildung von Objekten aus einem optischen Nahbereich auf ein Bildaufnahmeelement zu projizieren, in diesem Fall Regentropfen auf einer Windschutzscheibe. Wenn sich keine Regentropfen auf der Windschutzscheibe befinden, ist das auf das Bildaufnahmeelement projizierte Bild ausschließlich vom optischen Fernbereich dominiert. Wenn sich Tropfen auf der Windschutzscheibe befinden, wird die Abbildung des Fernbereichs durch die Abbildung des Nahbereichs in der gleichen Bildebene überlagert und das erzeugte Bildsignal wird verändert.

Nachteilig bei dem in der EP 1 923 280 A1 beschriebenen System sowie bei anderen multifokalen Abbildungssystemen aus dem Stand der Technik ist die Tatsache, dass Strahlung sowohl aus einem optischen Nahbereich als auch aus einem optischen Fernbereich gleichzeitig auf einem gemeinsamen Bereich des Bildaufnahmeelements auftrifft und dort zum einem Bildsignal führt. Dadurch wird für beide Fahrerassistenzfunktionen, d.h. für die Fernbereichsüberwachung und die Nahbereichsüberwachung, die Abbildungsqualität, durch die sich überlagernde Strahlung aus beiden Überwachungsbereichen, herabgesetzt.
Die US 2010/0208060 zeigt ein Kamerasystem zur Erkennung von Feuchtigkeit, insbesondere auf einer transparenten Fahrzeugscheibe. Das Kamerasystem umfasst gemäß einer Ausgestaltung ein Paar von Kameramodulen, die lateral versetzt nebeneinander angeordnet sind. Das erste Kameramoduls dient dabei zur Erfassung des Vorausbereichs vor dem Fahrzeug. Das zweite Kameramodul dient zusätzlich zur Regenerkennung und erfasst hierfür einen Bereich der Fahrzeugscheibe, der mittels einer Lichtquelle beleuchtet wird. Nachteilig an dieser Anordnung ist der hohe Bedarf an Einbauraum, Komponenten und Scheibenfläche für die Erfüllung der unterschiedlichen Sensorfunktionen, insbesondere aufgrund der lateral versetzten Anordnung der beiden Kameramodule.

Weitere Kamerasysteme sind in DE102007012993A und US2009/0085755A gezeigt.

Der Erfindung liegt demnach die Aufgabe zugrunde, ein Sensor- bzw. ein Kamerasystem anzugeben, das möglichst kompakt und kostengünstig hinter der Windschutzscheibe eines Fahrzeugs angeordnet werden kann und mit dem mehrere Sensorfunktionen gleichzeitig erfüllt werden können, insbesondere eine Erfassung von Bilder aus einem Umgebungsbereich vor dem Fahrzeug sowie eine Regen- und/oder Lichtsensorfunktion.
Diese Aufgabe wird durch ein Kamerasystem mit den Merkmalen nach Anspruch 1 gelöst. Vorteilhafte Ausgestaltungen und Weiterbildungen sind Gegenstand von Unteransprüchen, wobei auch Kombinationen und Weiterbildungen einzelner Merkmale miteinander denkbar sind.
Ein wesentlicher Gedanke der Erfindung besteht darin, in denselben Einbauraum, der für ein erstes (primäres) Kameramodul zur Erfassung eines Fahrzeugumfeldes vorgesehen ist, ein zweites (sekundäres) Kameramodul anzuordnen, insbesondere zur Erfassung der Windschutzscheibe des Fahrzeugs, z.B. zur Regenerkennung und/oder als Lichtsensor. Das zweite Kameramodul ist mit Blickrichtung durch eine Streulichtblende für das erste Kameramodul hindurch in dem Kamerasystem angeordnet. Damit wird eine platzsparende Ausnutzung eines gemeinsamen Einbauraums für mehrere Kameramodule bzw. Sensorfunktionen erreicht.

Das erfindungsgemäße Kamerasystem ist mit einem Gehäuse im Innenraum eines Fahrzeugs hinter der Windschutzscheibe des Fahrzeugs angeordnet, beispielsweise hinter einem Bereich der Windschutzscheibe, der von einem Scheibenwischer überwischt wird. Das Kamerasystem umfasst dabei ein erstes Kameramodul mit einem Objektiv und einem Bildaufnahmeelement, wobei das erste Kameramodul derart in dem Gehäuse angeordnet ist, dass es einen (Umgebungs-)Bereich vor dem Fahrzeug durch die Windschutzscheibe hindurch erfasst, insbesondere einen Vorausbereich in Fahrtrichtung des Fahrzeugs. Das Bildaufnahmeelement des ersten Kameramoduls ist vorzugsweise senkrecht zur optischen Achse des Objektivs des ersten Kameramoduls auf einer Leiterplatte angeordnet, wobei die optische Achse des Objektivs beispielsweise parallel zur Längsachse des Fahrzeugs in Fahrtrichtung ausgerichtet sein kann.
Das erfindungsgemäße Kamerasystem umfasst weiterhin mindestens ein zweites Kameramodul, welches ähnlich aufgebaut sein kann, wie das erste Kameramodul bzw. die gleichen oder ähnliche Elemente umfassen kann, und welches derart in dem Gehäuse angeordnet ist, dass das zweite Kameramodul einen Teil der Windschutzscheibe erfasst, insbesondere die Außenseite eines Bereichs der Windschutzscheibe. Bevorzugt wird als zweites Kameramodul eine optische Vorrichtung verwendet die einfacher und/oder kompakter aufgebaut ist als das erste Kameramodul und die vorzugsweise vorgefertigt ist und damit direkt auf einer Leiterplatte bestückt werden kann. Das zweite Kameramodul kann beispielweise auf der Rechenplatine des ersten Kameramoduls angeordnet sein.

Weiterhin umfasst das Kamerasystem wenigstens eine Streulichtblende. Die Streulichtblende ist bevorzugt für das erste Kameramodul an dem Gehäuse des Kamerasystems angeordnet, insbesondere zur Vermeidung von Reflexionen an der Windschutzscheibe und/oder an Elementen des Kamerasystems, z.B. an Linsen, Gehäuse- und/oder Fassungsteilen, von seitlich, d.h. insbesondere von außerhalb des Sichtbereichs des ersten Kameramoduls, in das Kamerasystem einfallenden Lichts bzw. einfallender elektromagnetischer Strahlung. Die Streulichtblende kann beispielsweise waagegerecht oder mit einem gewissen Neigungswinkel zur sowie unterhalb der optischen Achse des ersten Kameramoduls angeordnet sein. Das zweite Kameramodul ist erfindungsgemäß mit Blickrichtung durch die Streulichtblende hindurch in Richtung der Windschutzscheibe angeordnet, insbesondere mit nach oben gerichteter Blickrichtung auf den Scheibenbereich durch den das erste Kameramodul hindurch blickt. Vorzugsweise kreuzen bzw. überschneiden sich dabei die Blickrichtung des zweiten Kameramoduls und die optische Achse des ersten Kameramoduls in einem Bereich zwischen Gehäuse und Windschutzscheibe.

Erfindungsgemäss ist die Streulichtblende in einem Bereich zwischen Gehäuse und Windschutzscheibe angeordnet, vorzugsweise im Sichttrichter des ersten Kameramoduls.
In einer vorteilhaften Ausgestaltung des erfindungsgemäßen Kamerasystems sind das erste und das zweite Kameramodul derart ausgebildet, dass das erste und das zweite Kameramodul elektromagnetische Strahlung aus unterschiedlichen Wellenlängenbereichen erfassen. Das erste und das zweite Kameramodul können hierzu beispielweise mit unterschiedlichen Wellenlängenfiltern und/oder jeweils mit einem Bildaufnahmeelement mit Wellenlängenfilter ausgestaltet sein.
In einer weiteren vorteilhaften Ausgestaltung umfasst das Kamerasystem mindestens eine aktive Beleuchtung. Die aktive Beleuchtung strahlt dabei elektromagnetische Strahlung insbesondere mit einem bestimmten Wellenlängenbereich sowie bevorzugt in einen der Erfassungsbereiche des ersten und/oder des zweiten Kameramoduls aus. Der Wellenlängenbereich, der durch die mindestens eine aktive Beleuchtung ausgestrahlten elektromagnetischen Strahlung, entspricht dabei bevorzugt einem Wellenlängenbereich, der nur durch das erste oder nur durch das zweite Kameramodul erfasst wird. Die zumindest eine aktive Beleuchtung bzw. dessen ausgestrahlte elektromagnetische Strahlung kann auch über Lichtleiter in die Windschutzscheibe eingekoppelt werden.

In einer bevorzugten Ausgestaltung ist die mindestens eine aktive Beleuchtung neben dem zweiten Kameramodul angeordnet, mit Ausstrahlrichtung durch die Streulichtblende für das erste Kameramodul hindurch, in Richtung der Windschutzscheibe. Die aktive Beleuchtung strahlt dabei vorzugsweise elektromagnetische Strahlung in einem bestimmten Wellenlängenbereich in den Erfassungsbereich des zweiten Kameramoduls aus. Bei dem Wellenlängenbereich handelt es sich bevorzugt um einen Bereich, der durch das erste Kameramodul nicht erfasst wird, beispielsweise im Infrarotbereich. Das zweite Kameramodul kann dabei derart ausgestalten sein, dass es nur elektromagnetische Strahlung aus dem Wellenlängenbereich erfasst, den die aktive Beleuchtung ausstrahlt.

In einer vorteilhaften Ausgestaltung ist das Kamerasystem derart ausgebildet, dass das zweite Kameramodul und/oder die mindestens eine aktive Beleuchtung elektromagnetische Strahlung durch einen ausgesparten Bereich in der Streulichtblende hindurch erfasst bzw. ausstrahlt. Insbesondere bei nebeneinander angeordnetem zweiten Kameramodul und aktiver Beleuchtung, mit im Wesentlichen derselben Erfassungs- bzw. Ausstrahlrichtung, können für das zweite Kameramodul und die aktive Beleuchtung entweder jeweils ein eigener oder es kann für das Kameramodul und die aktive Beleuchtung ein gemeinsamer ausgesparter Bereich in der Streulichtblende ausgebildet sein. Die jeweils eigenen bzw. der gemeinsame ausgesparte Bereich ist dabei vorzugsweise jeweils dem gewünschten Öffnungswinkel des Sichtkegels des zweiten Kameramoduls und/oder dem Ausstrahlungswinkel der aktiven Beleuchtung angepasst ausgestaltet.

In einer weiteren vorteilhaften Ausgestaltung des erfindungsgemäßen Kamerasystems ist in zumindest einem ausgesparten Bereich der Streulichtblende, durch den das zweite Kameramodul und/oder die mindestens eine aktive Beleuchtung hindurch erfasst bzw. ausstrahlt, mindestens ein optisches Element angeordnet, beispielsweise eine Linse und/oder ein Wellenlängenfilter. Das optische Element kann dazu dienen, die Blickrichtung des zweiten Kameramoduls durch Strahlablenkung bzw. Strahlumformung gezielt zu beeinflussen und/oder an die Scheibenneigung anzupassen und/oder das zweite Kameramodul vor Verunreinigungen zu schützen. Bei Anordnung eines Wellenlängenfilters als optisches Element im ausgesparten Bereich, dient dieser vorzugsweise dazu, dass das zweite Kameramodul nur elektromagnetische Strahlung aus einem bestimmten Wellenlängenbereich erfasst und/oder, dass die zumindest eine aktive Beleuchtung nur elektromagnetische Strahlung aus einem bestimmten Wellenlängenbereich ausstrahlt.

In einer bevorzugten Ausgestaltung ist das Kamerasystem derart ausgebildet, dass das zweite Kameramodul und/oder die mindestens eine aktive Beleuchtung elektromagnetische Strahlung durch einen Teilbereich der Streulichtblende hindurch erfasst bzw. ausstrahlt, der für elektromagnetische Strahlung durchlässig bzw. für elektromagnetische Strahlung transmittierend ausgestaltet ist. Insbesondere bei nebeneinander angeordnetem zweiten Kameramodul und aktiver Beleuchtung, mit im Wesentlichen derselben Erfassungs- und Ausstrahlrichtung, können für das zweite Kameramodul und für die aktive Beleuchtung entweder jeweils ein eigener oder es kann für das zweite Kameramodul und die aktive Beleuchtung ein gemeinsamer durchlässiger Teilbereich in der Streulichtblende ausgebildet sein. Die jeweils eigenen bzw. der gemeinsame durchlässige Teilbereich sind dabei vorzugsweise jeweils dem gewünschten Öffnungswinkel des Sichtkegels des zweiten Kameramoduls und dem Ausstrahlungswinkel der mindestens einen aktiven Beleuchtung angepasst ausgestaltet.

In einer weiteren bevorzugten Ausgestaltung des erfindungsgemäßen Kamerasystems ist zumindest einer, der für elektromagnetische Strahlung durchlässig ausgestalteten Teilbereiche der Streulichtblende, durch den das zweite Kameramodul und/oder die mindestens eine aktive Beleuchtung hindurch erfasst bzw. ausstrahlt, derart ausgebildet, dass der zumindest eine Teilbereich nur elektromagnetische Strahlung aus einem bestimmten Wellenlängenbereich durchlässt bzw. transmittiert. Der zumindest eine Teilbereich kann damit als Wellenlängenfilter für das zweite Kameramodul und/oder die aktive Beleuchtung ausgestaltet sein.

In einer besonderen Ausführung des erfindungsgemäßen Kamerasystems sind das erste und das zweite Kameramodul auf einer gemeinsamen Leiterplatte angeordnet. Bevorzugt handelt es sich dabei um eine flexible Leiterplatte, mit einem ersten ebenen Bereich, der insbesondere senkrecht zur optischen Achse des ersten Kameramoduls angeordnet ist, einem zweiten ebenen Bereich, der insbesondere unterhalb und im Wesentlichen parallel zur Streulichtblende angeordnet ist, sowie mit einem gebogenen Bereich, der den ersten und den zweiten ebenen Bereich verbindet. Bevorzugt ist in dem Fall das erste Kameramodul auf dem ersten ebenen Bereich und das zweite Kameramodul auf dem zweiten ebenen Bereich der flexiblen Leiterplatte angeordnet. Bei Ausgestaltung des Kamerasystems mit mindestens einer aktiven Beleuchtung, kann diese beispielsweise neben dem zweiten Kameramodul auf dem zweiten ebenen Bereich der flexiblen Leiterplatte angeordnet sein.

In einer vorteilhaften Ausgestaltung des erfindungsgemäßen Kamerasystems, ist das erste Kameramodul auf einer ersten Leiterplatte und das zweite Kameramodul auf einer zweiten Leiterplatte angeordnet. Die erste Leiterplatte ist dabei vorzugsweise senkrecht zur optischen Achse des ersten Kameramoduls und die zweite Leiterplatte unterhalb sowie im Wesentlichen parallel zur Streulichtblende des Kamerasystems ausgerichtet, so dass die erste und die zweite Leiterplatte mit darauf angeordnetem ersten bzw. zweiten Kameramodul in einem bestimmten Winkel zueinander in dem Gehäuse angeordnet sind, vorzugsweise in einem Winkel von größer 90° und kleiner als 135°. Die erste und die zweite Leiterplatte sind dabei bevorzugt über flexible Kontakte miteinander verbunden.

In einer besonderen Ausführung des erfindungsgemäßen Kamerasystems ist das zweite Kameramodul in die Streulichtblende integriert. Damit kann auf einfache und vorteilhafte Weise ein modulares Aufbaukonzept für das Kamerasystem erreicht werden, insbesondere um eine vorhandene Kamera zur Umgebungserfassung, durch Aufstecken bzw. Anordnung der Streulichtblende, um eine Licht- und/oder Regensensorfunktion zu erweitern. Bei Anordnung der Streulichtblende in dem Gehäuse des Kamerasystems ist dabei vorzugsweise eine mechanische Verbindung zwischen der Streulichtblende und dem Gehäuse, in dem das Kamerasystem angeordnet ist, und eine elektrische Verbindung zwischen dem zweiten Kameramodul und der Leiterplatte auf der das erste Kameramodul angeordnet ist, hergestellt. Die mechanische Verbindung kann beispielsweise mittels Einrastvorrichtungen oder mittels anderen Verbindungstechniken realisiert werden, beispielsweise Klebetechnik. Die elektrische Verbindung erfolgt vorzugsweise über elektrische Steckkontakte. Als Auswerteeinheit und Schnittstelle zu weiterer Fahrzeugelektronik für das zweite Kameramodul kann die Elektronik und die technischen Einrichtungen des ersten Kameramoduls verwendet werden.

In einer vorteilhaften Ausführung des erfindungsgemäßen Kamerasystems erfolgt die Verarbeitung, der durch das erste und das zweite Kameramodul erfassten Bilddaten, über dieselben, d.h. über gemeinsame elektrische bzw. elektronische Einrichtungen, insbesondere innerhalb des Kamerasystems.

In einer besonderen Ausgestaltung des erfindungsgemäßen Kamerasystems ist das zweite Kameramodul bzw. Blickrichtung des zweiten Kameramoduls sowie dessen optische Achse derart ausgerichtet, dass das zweite Kameramodul eine nicht senkrechte Blickrichtung zur Windschutzscheibe des Fahrzeugs bzw. zu dem vom zweiten Kameramodul erfasst Bereich der Windschutzscheibe aufweist. Unter senkrechter Blickrichtung ist dabei insbesondere eine Ausrichtung der optischen Achse des zweiten Kameramoduls im 90°-Winkel zur Tangente, d.h. zur Senkrechten, betreffend die Scheibenkrümmung im Schnittpunkt zwischen optischer Achse und Windschutzscheibe zu verstehen. Das zweite Kameramodul weist somit vorzugsweise eine von dieser Ausrichtung abweichende Ausgestaltung auf. Dadurch ergeben sich unterschiedliche Abstände, insbesondere eines Bildaufnahmeelements des zweiten Kameramoduls, zur Windschutzscheibe, so dass nur ein Teil des insgesamt erfassten Bereichs der Windschutzschiebe durch das zweite Kameramodul bzw. auf dessen Bildaufnahmeelement fokussiert bzw. bildscharf zur Abbildung gebracht wird. Dies kann in vorteilhafter Weise dazu genutzt werden, dass auch bei einer schlecht bzw. bei einem ungenau fokussierten zweiten Kameramodul trotzdem immer ein Teil des insgesamt erfasst Bereich der Windschutzscheibe fokussiert abgebildet wird. Besonders vorteilhaft an dieser Ausgestaltung ist beispielsweise auch, dass z.B. eine Defokussierung/Dejustage des zweite Kameramodul beispielsweise infolge von Temperaturäderungen und/oder Materialausdehnungen ausgeglichen werden, da sich in dem Falle lediglich der fokussiert abgebildete Bereich verschiebt. Für Erkennung beispielsweise von Regen, reicht es in der Regel aus, wenn nur ein kleiner Teilbereich fokussiert abgebildet wird.

Besonders vorteilhaft ist eine Ausgestaltung des erfindungsgemäßen Kamerasystems, bei der das zweite Kameramodul in einem für das erste Kameramodul nicht erfassbaren Wellenlängenbereich arbeitet. In diesem Fall kann die Streulichtblende in einem für den Wellenlängenbereich des zweiten Kameramoduls durchlässigen bzw. transmittierenden Material gefertigt werden. Der durch das erste Kameramodul erfassbare Wellenlängenbereich könnte durch selbiges Material absorbiert werden. Weitergehend kann in diesem Fall das gesamte Gehäuse des Kamerasystems aus einem entsprechenden Material gefertigt werden, mit direkt an dem Gehäuse ausgebildeter Streulichtblende.

Weitere Vorteile sowie optionale Ausgestaltungen gehen aus der Beschreibung und den Zeichnungen hervor. Ausführungsbeispiele sind in den Zeichnungen vereinfacht dargestellt und in der nachfolgenden Beschreibung näher erläutert.

Es zeigt
- Figur 1:: ein erfindungsgemäßes Kamerasystem in Ausgestaltung mit Streulichtblende und ausgespartem Bereich in der Streulichtblende.
- Figur 2:: ein erfindungsgemäßes Kamerasystem in Ausgestaltung mit einem optischen Element im ausgesparten Bereich der Streulichtblende.
- Figur 3:: eine Leiterplatte auf dem das zweite Kameramodul und zwei aktive Beleuchtungen angeordnet sind.
- Figur 4:: ein erfindungsgemäßes Kamerasystem in Ausgestaltung mit aktiver Beleuchtung sowie mit einem Gehäuse aus lichtdurchlässigem Material und in das Gehäuse integrierter Streulichtblende.

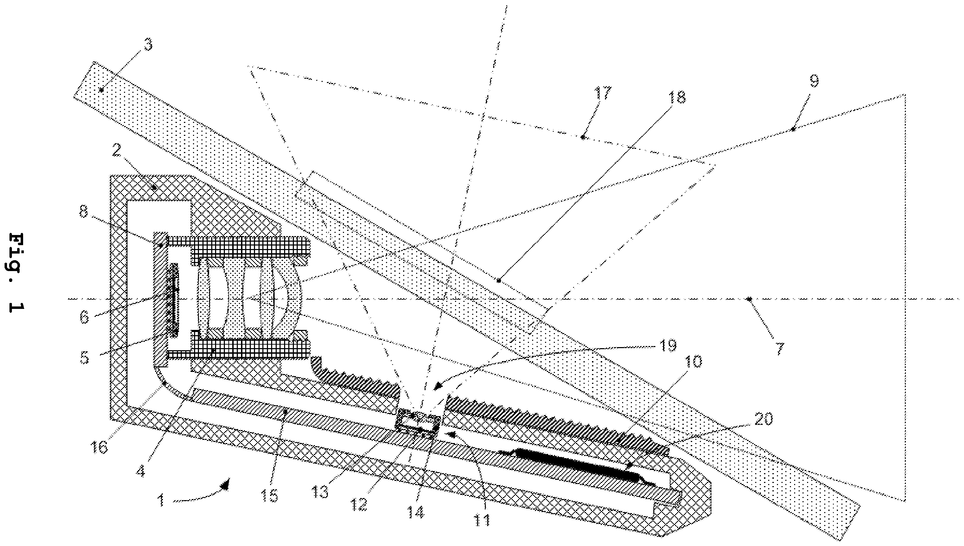

Fig. 1 zeigt ein Beispiel für ein erfindungsgemäßes Kamerasystem 1 mit einem Gehäuse 2, das hinter der Windschutzscheibe 3 eines Fahrzeugs angeordnet ist. Das Kamerasystem 1 umfasst ein erstes Kameramodul mit einem Objektiv 4 und einem Bildaufnahmeelement 5. Das Objektiv 4 umfasst in diesem Fall mehrere Linsenelemente und ist auf einer Leiterplatte 8 im Gehäuse 2 angeordnet. Bei dem Bildaufnahmeelement 5 handelt es sich in diesem Fall um ein Bildchip (Imager), beispielsweise ein CCD- oder CMOS-Bildchip. Das Bildaufnahmeelement 5 umfasst eine für elektromagnetische Strahlung sensitive Fläche 6 und ist senkrecht zur optischen Achse 7 des Objektivs 4 in BGA-Technik (BGA-Package, Ball-Grid-Array) auf der Leiterplatte 8 angeordnet. Das erste Kameramodul mit Objektiv 4 und Bildaufnahmeelement 5 ist mit Blickrichtung bzw. Sichtkegel 9 in Fahrtrichtung des Fahrzeugs durch die Windschutzscheibe 3 hindurch ausgerichtet. Die optische Achse 7 des ersten Kameramoduls bzw. des Objektivs 4 ist dabei im Wesentlichen parallel zur Fahrzeuglängsachse ausrichtet, wobei der Ausdruck "im Wesentlichen" eine mögliche Abweichung im Bereich von +/- 30° einschließt. Das erste Kameramodul dient beispielsweise der Erfassung eines Vorausbereichs vor dem Fahrzeug, beispielsweise zur Erkennung von Fahrspuren, Verkehrszeichen, Ampelanlagen, anderen Objekten und Hindernissen und/oder von Passanten und anderen Verkehrsteilnehmern, z.B. für eines oder mehrere Fahrerassistenzsysteme wie Antriebsschlupfregelung bzw. Traktionskontrolle wie ABS (Antiblockiersystem), ASR (Antriebs-Schlupf-Regelung), ESP (Elektronisches Stabilitätsprogramm), EDS (Elektronische Differentialsperre), sowie adaptives Kurvenlicht, Auf- und Abblendassistent für das Fahrlicht, Nachtsichtsysteme (englisch: night vision), Tempomat, Einparkhilfe, Bremsassistent, ACC (Adaptive Cruise Control) bzw. Abstandsregeltempomat, Abstandswarner, Abbiegeassistent, Stauassistent, Spurerkennungssystem, Spurhalteassistent, Spurhalteunterstützung, Spurwechselassistent, ISA (Intelligent Speed Adaption), ANB (Automatische Notbremsung), Kurvenassistent, Reifendruckkontrollsystem, Fahrerzustandserkennung, Verkehrszeichenerkennung, Platooning.
Das Kamerasystem 1 umfasst entsprechend Fig. 1 weiterhin eine Streulichtblende 10, die mit einem geringem Neigungswinkel zur sowie unterhalb der optischen Achse 7 des ersten Kameramoduls zwischen dem Gehäuse 2 und der Windschutzscheibe 3 angeordnet ist. Die Streulichtblende 10 ist weitgehend flächig ausgestaltet, in diesem Fall mit einer zur Windschutzscheibe 3 ausgerichteten gezahnten Oberflächenstruktur, die zur Vermeidung von Streulichteinfall in das erste Kameramodul bzw. das Objektiv 4 dient, ausgelöst beispielsweise durch Reflexionen von seitlich einfallendem Licht an der Windschutzscheibe 3 und/oder an Elementen des Kamerasystems 1. Das Kamerasystem 1 umfasst weiterhin ein zweites Kameramodul 11. Das zweite Kameramodul 11 kann erfindungsgemäß in gleicher Weise oder ähnlich wie das erste Kameramodul aufgebaut sein. In diesem Fall umfasst das zweite Kameramodul ein Bildaufnahmeelement 12 eine Linse 13 sowie eine Haltestruktur 14 für die Linse 13. Haltestruktur 14 und Linse 13 bilden damit ein Objektiv, das mit dem Bildaufnahmeelement 12 des zweiten Kameramoduls 11 verbunden ist und auf einer Leiterplatte 15 angeordnet ist. Die Leiterplatte 15 ist unterhalb sowie parallel zur Streulichtblende 10 innerhalb des Gehäuses 2 angeordnet und über flexible Kontakte 16 mit der Leiterplatte 8, die senkrecht zur optischen Achse 7 des ersten Kameramoduls im Gehäuse 2 ausgerichtet ist und auf der das erste Kameramodul angeordnet ist, verbunden. Das Bildaufnahmeelement 12 des zweiten Kameramoduls 11 kann beispielsweise mit einem integrierten Wellenlängenfilter ausgestaltet sein, so dass bei vorteilhafter Ausgestaltung des Kamerasystems 1 durch das zweite Kameramodul 11 elektromagnetische Strahlung nur aus einem bestimmten Wellenlängenbereich erfasst wird.
Das zweite Kameramodul 11 ist dabei derart in dem Kamerasystem 11 angeordnet, dass es mit Blickrichtung bzw. Sichtkegel 17 durch die Streulichtblende 10 hindurch ausgestaltet ist und einen Teil bzw. einen Bereich 18 der Windschutzscheibe 3 erfasst, in diesem Fall einen Bereich 18 der Außenseite der Windschutzscheibe 3. Das zweite Kameramodul 11 kann dabei beispielsweise zur Erkennung von Regen bzw. Regentropfen und/oder als Lichtsensor dienen. Das zweite Kameramodul 11 blickt dabei durch einen ausgesparten Bereich 19 in der Streulichtblende 10 sowie im Gehäuse 2 hindurch in Richtung der Windschutzscheibe 3.
Auf den Leiterplatten 8 und 15 können weitere technische bzw. elektronische Einrichtungen angeordnet sein, beispielsweise Halbleiterbauteile 20, insbesondere zur Durchführung von Bildverarbeitungsausgaben. Bevorzugt nutzen das erste Kameramodul und das zweite Kameramodul 11 gemeinsame elektronische Einrichtungen 20 zur Verarbeitung von erfassten Bilddaten.

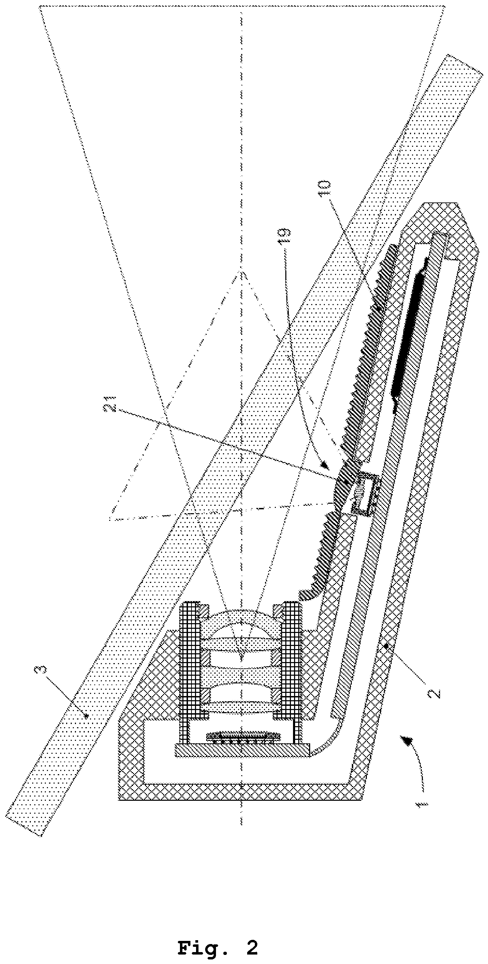

In Fig. 2 ist ein weiteres Beispiel für ein erfindungsgemäßes Kamerasystem 1, das hinter einer Windschutzscheibe 3 angeordnet ist, dargestellt. Das Kamerasystem 1 aus Fig. 2 ist in weiten Teilen entsprechend der Beschreibung zu Fig. 1 aufgebaut. Im Gegensatz zu Fig. 1 ist bei dem Kamerasystem 1 aus Fig. 2 in dem ausgesparten Bereich 19 in der Streulichtblende 10 und im Gehäuse 2 ein optisches Element 21 angeordnet. In diesem speziellen Fall ist dabei das optische Element 21 als Teil der Streulichtblende 10 ausgebildet und kann beispielsweise aus einem anderen Material als der restliche Teil der Streulichtblende 10 ausgestaltet sein, beispielsweise mit speziellen Lichtbrechungseigenschaften und/oder mit optischen Filtereigenschaften. Das optische Element 21 kann somit beispielsweise als Linse bzw. Strahlformungselement und/oder als Strahllenkungselement und/oder als Wellenlängenfilter für die in das zweite Kameramodul 11 einfallende elektromagnetische Strahlung dienen. In Fig. 2 ist eine keilförmige Unterseite des optischen Elements 21 gezeigt, welche die Blickrichtung 17 des zweiten Kameramoduls 11 besser zur Windschutzscheibe 3 ausrichtet, sowie eine linsenförmige Oberseite des optischen Elements 21, welche eine zusätzliche Fokussierung ermöglicht. Bei Ausgestaltung des optischen Elements 21 mit Filtereigenschaften, kann dieses insbesondere als Wellenlängenfilter für das zweite Kameramodul 11 dienen, so dass durch das Kameramodul 11, entsprechend einer vorteilhaften Ausgestaltung des erfindungsgemäßen Kamerasystems 1, nur elektromagnetische Strahlung aus einem bestimmten Wellenlängenbereich erfasst wird.

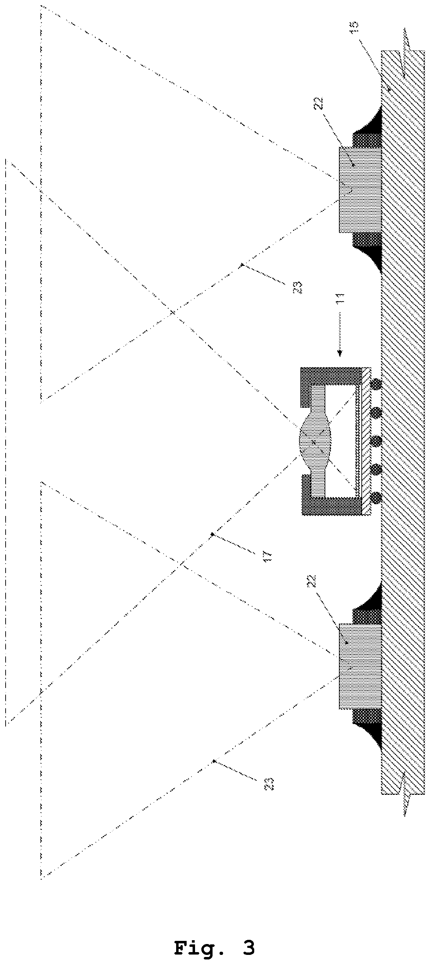

Fig. 3 zeigt eine Leiterplatte 15 auf der das zweite Kameramodul 11 angeordnet sein kann. Die Leiterplatte 15 wird dabei vorzugsweise entsprechend den Figuren 1 und 2 in dem Gehäuse 2 des Kamerasystems 1 unterhalb der Streulichtblende 10 angeordnet. Auf der Leiterplatte 15 aus Fig. 3 sind neben dem zweiten Kameramodul 11 zusätzlich zwei aktive Beleuchtungen 22 angeordnet, beispielsweise Leuchtdioden (z.B. LEDs oder OLEDs). Die aktiven Beleuchtungen 22 dienen dabei der Ausstrahlung 23 von elektromagnetischer Strahlung, vorzugsweise aus einem bestimmten Wellenlängenbereich, in den Erfassungsbereich des zweiten Kameramoduls 11, beispielsweise einen Bereich 18 einer Windschutzscheibe 3. Das zweite Kameramodul 11 kann insbesondere derart ausgestaltet sein, dass dieses ebenfalls nur elektromagnetische Strahlung aus einem bestimmten Wellenlängenbereich erfasst. Vorzugsweise handelt es sich bei den Wellenlängenbereichen der elektromagnetischen Strahlung, welche durch das zweite Kameramodul 11 erfasst und welche durch die aktiven Beleuchtungen 22 ausgestrahlt wird, um elektromagnetische Strahlung aus dem gleichen Wellenlängenbereich.

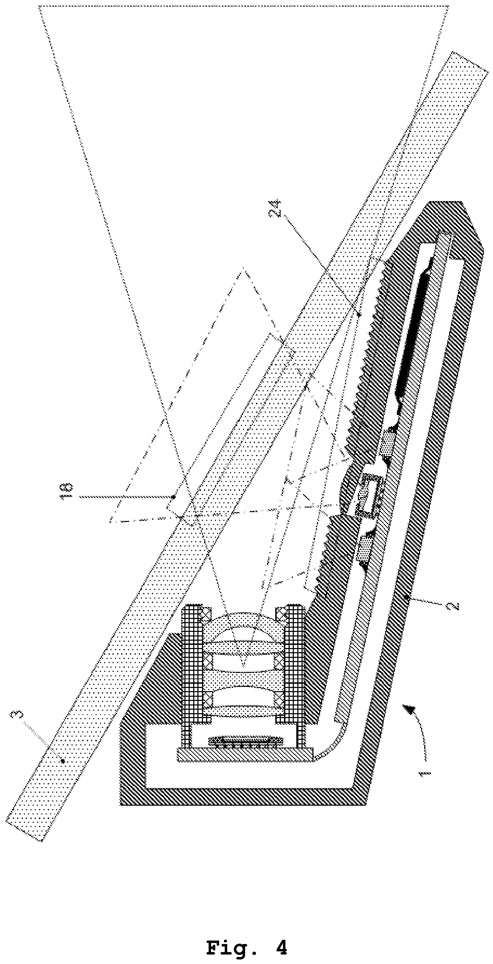

Fig. 4 zeigt ein weiteres Beispiel für ein erfindungsgemäßes Kamerasystem 1, das hinter einer Windschutzscheibe 3 eines Fahrzeugs angeordnet ist. Das Kamerasystem 1 aus Fig. 4 ist dabei in weiten Teilen entsprechend der Beschreibung zu den Figuren 1 und 2 aufgebaut. In diesem Fall sind die Streulichtblende 10 und das Gehäuse 2 des Kamerasystems 1 als ein Teil bzw. als Verbundelement ausgestaltet. Ein Bereich 24 mit Streulichtblenden-Funktion ist dabei zumindest in einigen Teilen für elektromagnetische Strahlung, beispielsweise für elektromagnetische Strahlung aus einem bestimmten Wellenlängenbereich, durchlässig ausgestaltet. Bevorzugt kann auch das gesamte Gehäuse aus Fig. 4 aus dem gleichen lichtdurchlässigen Material gefertigt sein. Unterhalb des Bereichs 24 mit Streulichtblenden-Funktion ist eine Leiterplatte 15 entsprechend der Beschreibung zu Fig. 3 angeordnet, mit einem zweiten Kameramodul 11 und zwei aktiven Beleuchtungen 22. Im Bereich 24 des Gehäuses 2 ist dabei im Durchtrittsbereich der in das zweite Kameramodul 11 einfallenden elektromagnetischen Strahlung ein optisches Element 21 ausgebildet. Der Bereich 24 mit Streulichtblenden-Funktion des Gehäuses kann dabei in den für elektromagnetische Strahlung durchlässigen Bereichen für die aktiven Beleuchtungen 22 und/oder für das zweite Kameramodul 11 als Wellenlängenfilter fungieren, so dass durch die aktiven Beleuchtungen 22 nur elektromagnetische Strahlung aus einem bestimmten Wellenlängenbereich in den Erfassungsbereich 18 des zweiten Kameramoduls 11 ausgestrahlt wird und dass durch das zweite Kameramodul 11 nur elektromagentische Strahlung aus einem bestimmten, insbesondere aus dem gleichen wie durch die Beleuchtungen 22 ausgestrahlten Wellenlängenbereich, erfasst wird. Das Material des Gehäuses 2, insbesondere im Bereich 24 mit Streulichtblenden-Funktion, kann beispielsweise derart gewählt sein, dass die aktiven Beleuchtungen 22 und das zweite Kameramodul 11 im Infrarotbereich arbeiten.

Anstelle der getrennten Leiterplatten 8 und 15 mit flexiblen Kontakten 16 bzw. mit einem flexiblen Bereich zwischen zwei starren Bereichen, entsprechend Fig. 1, Fig. 2 und Fig. 4, könnten das erste Kameramodul und das zweite Kameramodul 11 auch auf einer gemeinsamen Leiterplatte, insbesondere auf einer flexiblen Leiterplatte (Flex-Leiterplatte) angeordnet sein. Die flexible Leiterplatte könnte in dem Fall
- einen ersten ebenen Bereich, der senkrecht zur optischen Achse 7 des Objektivs 4 des ersten Kameramoduls ausgerichtet und auf dem das erste Kameramodul angeordnet ist,
- eine zweiten ebenen Bereich, der unterhalb der Streulichtblende 10 in dem Gehäuse 2 des Kamerasystems 1 und auf dem das zweite Kameramodul 11, vorzugsweise mit aktiven Beleuchtungen 22, angeordnet ist, sowie
- einen gebogenen Bereich, der den ersten und den zweiten ebenen Bereich verbindet,
umfassen.

Vorangehend wurde mehrfach beschrieben, dass das erste Kameramodul und das zweite Kameramodul 11 derart ausgestaltet sein können, dass diese jeweils nur elektromagnetische Strahlung aus einem bestimmten Wellenlängenbereich erfassen, sowie dass die zumindest eine aktive Beleuchtung 22 zur Ausstrahlung von elektromagnetischer Strahlung, insbesondere in den Erfassungsbereich des zweiten Kameramoduls 11, ebenfalls derart ausgestaltet sein kann, dass diese nur elektromagnetische Strahlung aus einem bestimmten Wellenlängenbereich ausstrahlt. Als Wellenlängenbereiche sind dabei grundsätzlich alle Spektralbereiche möglich, die mittels Wellenlängenfilter bzw. Spektralfilter unterscheidbar sind. Vorzugsweise sind dabei das erste und das zweite Kameramodul 11 derart ausgebildet, dass diese jeweils elektromagnetische Strahlung aus unterschiedlichen Wellenlängenbereichen erfassen und insbesondere für den Wellenlängenbereich des jeweils anderen Kameramoduls hingegen "blind" sind. Besonders vorteilhaft ist es, wenn beispielsweise das zweite Kameramodul 11 und die aktive Beleuchtung 22 nur im Infrarotbereich, d.h. im Spektralbereich von größer als 780 nm, arbeiten und das erste Kameramodul hingegen nur "sichtbares" Licht, beispielweise in einem Spektralbereich von unterhalb von 780 nm, erfasst, so dass die von der aktiven Beleuchtung 22 ausgestrahlte elektromagentische Strahlung die Erfassung des zweiten Kameramoduls 11 verbessert, insbesondere bei schlechten Sichtverhältnissen, und gleichzeitig die Erfassung des ersten Kameramoduls durch die aktive Beleuchtung 22 nicht gestört wird.

### Bezeichnungsliste

- 1: Kamerasystem
- 2: Gehäuse
- 3: Windschutzscheibe
- 4: Objektiv
- 5: Bildaufnahmeelement (erstes Kameramodul)
- 6: sensitive Fläche
- 7: optische Achse
- 8: Leiterplatte
- 9: Sichtkegel / Blickrichtung (erstes Kameramodul)
- 10: Streulichtblende
- 11: zweites Kameramodul
- 12: Bildaufnahmeelement (zweites Kameramodul)
- 13: Linse
- 14: Haltestruktur
- 15: Leiterplatte
- 16: flexible Kontakte
- 17: Sichtkegel / Blickrichtung (zweites Kameramodul)
- 18: (Außen-)Bereich der Windschutzscheibe
- 19: Aussparung
- 20: Halbleiterbauteil
- 21: optisches Element
- 22: aktive Beleuchtung
- 23: Ausstrahlung (der aktiven Beleuchtung)
- 24: Bereich mit Streulichtblenden-Funktion

## Patentansprüche

1. Kamerasystem (1) für ein Fahrzeug,
das im Fahrzeuginnenraum hinter einer Windschutzscheibe (3) des Fahrzeugs angeordnet ist,
umfassend
- ein Gehäuse (2),
- ein erstes Kameramodul mit einem Objektiv (4) und einem Bildaufnahmeelement (5), das einen Bereich vor dem Fahrzeug erfasst
und
- ein zweites Kameramodul (11), das zumindest einen Bereich (18) der Windschutzscheibe (3) erfasst,
**dadurch gekennzeichnet, dass**
das Kamerasystem (1) mindestens eine Streulichtblende (10) für das erste Kameramodul umfasst, zur Vermeidung von Reflexionen seitlich einfallenden Lichts an Teilen des Kamerasystems (1) und an der Windschutzscheibe (3),
wobei die Streulichtblende (10) in einem Bereich zwischen dem Gehäuse (2) des Kamerasystems (1) und der Windschutzscheibe (3) angeordnet und mit einer zur Windschutzscheibe (3) ausgerichteten gezahnten Oberflächenstruktur ausgestaltet ist,
wobei das zweite Kameramodul (11) mit Blickrichtung durch die Streulichtblende (10) hindurch in Richtung der Windschutzscheibe (3) angeordnet ist.

2. Kamerasystem (1) nach einem der vorangegangenen Ansprüche,
**dadurch gekennzeichnet, dass**
das erste und das zweite Kameramodul (11) derart ausgebildet sind, dass das erste und das zweite Kameramodul (11) elektromagnetische Strahlung aus unterschiedlichen Wellenlängenbereichen erfassen.

3. Kamerasystem (1) nach einem der vorangegangenen Ansprüche,
umfassend mindestens eine aktive Beleuchtung (22), die elektromagnetische Strahlung mit einem bestimmten Wellenlängenbereich ausstrahlt.

4. Kamerasystem (1) nach Anspruch3,
**dadurch gekennzeichnet, dass** die von der aktiven Beleuchtung (22) ausgestrahlte elektromagnetische Strahlung in die Windschutzscheibe (3) eingekoppelt wird.

5. Kamerasystem (1) nach Anspruch 3,
**dadurch gekennzeichnet, dass**
die mindestens eine aktive Beleuchtung (22) neben dem zweiten Kameramodul (11) angeordnet ist, mit Ausstrahlrichtung durch die Streulichtblende (10) hindurch in Richtung der Windschutzscheibe (3).

6. Kamerasystem (1) nach einem der vorherigen Ansprüche,
**dadurch gekennzeichnet, dass**
das zweite Kameramodul (11) und/oder die mindestens eine aktive Beleuchtung (22) elektromagnetische Strahlung durch einen ausgesparten Bereich (19) in der Streulichtblende (10) hindurch erfasst und/oder ausstrahlt.

7. Kamerasystem (1) nach Anspruch 6,
**dadurch gekennzeichnet, dass**
in zumindest einem ausgesparten Bereich (19) der Streulichtblende (10) mindestens ein optisches Element (21) angeordnet ist.

8. Kamerasystem (1) nach einem der Ansprüche 1 bis 5,
**dadurch gekennzeichnet, dass**
das zweite Kameramodul (11) und/oder die mindestens eine aktive Beleuchtung (22) durch einen Teilbereich der Streulichtblende (10) hindurch erfasst und/oder ausstrahlt, der für elektromagnetische Strahlung durchlässig ausgestaltet ist.

9. Kamerasystem (1) nach Anspruch 8,
**dadurch gekennzeichnet, dass**
zumindest einer der für elektromagnetische Strahlung durchlässig ausgestalteten Teilbereiche der Streulichtblende (10) für elektromagnetische Strahlung eines bestimmten Wellenlängenbereichs durchlässig ausgestaltet ist.

10. Kamerasystem (1) nach einem der vorangegangenen Ansprüche,
**dadurch gekennzeichnet, dass**
das erste und das zweite Kameramodul (11) auf einer gemeinsamen Leiterplatte angeordnet sind, wobei die Leiterplatte eine flexible Leiterplatte ist,
- mit einem ersten ebenen Bereich senkrecht zur optischen Achse (7) des ersten Kameramoduls,
- einem zweiten ebenen Bereich unterhalb der Streulichtblende (10) und
- einem gebogenen Bereich ausgestaltet ist, der den ersten und den zweiten ebenen Bereich verbindet,
wobei
das erste Kameramodul auf dem ersten ebenen Bereich der flexiblen Leiterplatte und
das zweite Kameramodul (11) auf dem zweiten ebenen Bereich der flexiblen Leiterplatte angeordnet ist.

11. Kamerasystem (1) nach einem der Ansprüche 1 bis 9, **dadurch gekennzeichnet, dass**
das erste Kameramodul auf einer ersten Leiterplatte (8) und das zweite Kameramodul (11) auf einer zweiten Leiterplatte (15) angeordnet ist,
wobei die zweite Leiterplatte (15) unterhalb der Streulichtblende (10) angeordnet und über flexible Kontakte (16) mit der ersten Leiterplatte (8) verbunden ist.

12. Kamerasystem (1) nach einem der vorangegangenen Ansprüche,
**dadurch gekennzeichnet, dass**
das zweite Kameramodul (11) in die Streulichtblende (10) integriert ist und bei Anordnung der Streulichtblende (10) in dem Kamerasystem (1)
- eine mechanische Verbindung zwischen der Streulichtblende (10) und dem Gehäuse (2) des Kamerasystems (1) und
- eine direkte oder indirekte elektrische Verbindung zwischen dem zweiten Kameramodul (11) und der Leiterplatte (8), auf der das erste Kameramodul angeordnet ist, hergestellt ist.

13. Kamerasystem (1) nach einem der vorangegangenen Ansprüche,
**dadurch gekennzeichnet, dass**
das erste und das zweite Kameramodul (11) gemeinsame elektronische Einrichtungen (20) zur Verarbeitung von erfassten Bilddaten nutzen.

14. Kamerasystem (1) nach einem der vorangegangenen Ansprüche,
**dadurch gekennzeichnet, dass**
das zweite Kameramodul (11) eine Blickrichtung aufweist, die nicht senkrecht zum erfassten Bereich (18) der Windschutzscheibe (3) ausgerichtet ist, so dass das zweite Kameramodul (11) nur einen Teilbereich des insgesamt durch das zweite Kameramodul erfassten Bereichs (18) der Windschutzscheibe (3) fokussiert abbildet.

## Claims

1. A camera system (1) for a vehicle,
which is arranged in the vehicle interior behind a windscreen (3) of the vehicle,
comprising
- a housing (2),
- a first camera module having a lens (4) and an image acquisition element (5), which captures a region in front of the vehicle,
and
- a second camera module (11) which captures at least one region (18) of the windscreen (3),
**characterised in that**
the camera system (1) comprises at least one lens hood (10) for the first camera module, in order to prevent reflections of laterally incident light on parts of the camera system (1) and on the windscreen (3),
wherein the lens hood (10) is arranged in a region between the housing (2) of the camera system (1) and the windscreen (3) and is configured with a serrated surface structure aligned with the windscreen (3),
wherein the second camera module (11) is arranged with its viewing direction through the lens hood (10) in the direction of the windscreen (3).

2. The camera system (1) according to any one of the preceding claims,
**characterised in that**
the first and the second camera module (11) are formed in such a way that the first and the second camera module (11) capture electromagnetic radiation from different wavelength ranges.

3. The camera system (1) according to any one of the preceding claims,
comprising at least one active illumination (22) which emits electromagnetic radiation having a particular wavelength range.

4. The camera system (1) according to Claim 3,
**characterised in that** the electromagnetic radiation emitted by the active illumination (22) is coupled into the windscreen (3).

5. The camera system (1) according to Claim 3, **characterised in that**
the at least one active illumination (22) is arranged next to the second camera module (11), having an emission direction through the lens hood (10) in the direction of the windscreen (3).

6. The camera system (1) according to any one of the preceding claims,
**characterised in that**
the second camera module (11) and/or the at least one active illumination (22) capture(s) and/or emit(s) electromagnetic radiation through a hollow region (19) in the lens hood (10).

7. The camera system (1) according to Claim 6,
**characterised in that**
at least one optical element (21) is arranged in at least one hollow region (19) of the lens hood (10).

8. The camera system (1) according to any one of Claims 1 to 5, **characterised in that**
the second camera module (11) and/or the at least one active illumination (22) capture(s) and/or emit(s) through a partial region of the lens hood (10) which is configured to be transparent to electromagnetic radiation.

9. The camera system (1) according to Claim 8,
**characterised in that**
at least one of the partial regions of the lens hood (10) configured to be transparent to electromagnetic radiation is configured to be transparent to electromagnetic radiation of a particular wavelength range.

10. The camera system (1) according to any one of the preceding claims,
**characterised in that**
the first and the second camera module (11) are arranged on a common printed circuit board, wherein the printed circuit board is a flexible printed circuit board,
- having a first planar region perpendicular to the optical axis (7) of the first camera module,
- a second planar region below the lens hood (10), and
- a bent region is configured which connects the first and the second planar region,
wherein
the first camera module is arranged on the first planar region of the flexible printed circuit board, and
the second camera module (11) is arranged on the second planar region of the flexible printed circuit board.

11. The camera system (1) according to any one of Claims 1 to 9,
**characterised in that**
the first camera module is arranged on a first printed circuit board (8) and the second camera module (11) is arranged on a second printed circuit board (15),
wherein the second printed circuit board (15) is arranged below the lens hood (10) and is connected by means of flexible contacts (16) to the first printed circuit board (8) .

12. The camera system (1) according to any one of the preceding claims
**characterised in that**
the second camera module (11) is integrated into the lens hood (10) and when the lens hood (10) is arranged in the camera system (1)
- a mechanical connection is established between the lens hood (10) and the housing (2) of the camera system (1),
and
- a direct or indirect electrical connection is established between the second camera module (11) and the printed circuit board (8), on which the first camera module is arranged.

13. The camera system (1) according to any one of the preceding claims,
**characterised in that**
the first and the second camera module (11) use common electronic devices (20) for processing captured image data.

14. The camera system (1) according to any one of the preceding claims,
**characterised in that**
the second camera module (11) has a viewing direction which is not aligned perpendicular to the captured region (18) of the windscreen (3) so that the second camera module (11) only depicts a partial region of the region (18) of the windscreen (3), which is captured in its entirety by the second camera module, in a focussed manner.

## Revendications

1. Système de caméra (1) pour un véhicule,
disposé dans l'habitacle du véhicule derrière un pare-brise (3) du véhicule,
comprenant
- un boîtier (2),
- un premier module de caméra avec un objectif (4) et un élément de prise de vue (5) détectant une zone devant le véhicule,
et
- un deuxième module de caméra (11) détectant au moins une zone (18) du pare-brise (3),
**caractérisé**
**en ce que** ledit système de caméra (1) comprend au moins un écran pare-lumière (10) pour le premier module de caméra, destiné à empêcher la réflexion de lumière incidente latéralement sur des parties du système de caméra (1) et sur le pare-brise (3),
ledit écran pare-lumière (10) étant disposé dans une zone entre le boîtier (2) du système de caméra (1) et le pare-brise (3) et étant pourvu d'une structure de surface à denture orientée vers le pare-brise (3),
le deuxième module de caméra (11) étant disposé avec une direction de visée vers le pare-brise (3) traversant l'écran pare-lumière (10).

2. Système de caméra (1) selon l'une quelconque des revendications précédentes,
**caractérisé en ce que** le premier et le deuxième module de caméra (11) sont conçus de telle manière que le premier et le deuxième module de caméra (11) détectent un rayonnement électromagnétique dans différentes plages de longueurs d'onde.

3. Système de caméra (1) selon l'une quelconque des revendications précédentes,
comprenant au moins un éclairage actif (22) émettant un rayonnement électromagnétique dans une plage de longueurs d'onde définie.

4. Système de caméra (1) selon la revendication 3,
**caractérisé**
**en ce que** le rayonnement électromagnétique émis par l'éclairage actif (22) est couplé dans le pare-brise (3).

5. Système de caméra (1) selon la revendication 3,
**caractérisé**
**en ce que** ledit au moins un éclairage actif (22) est disposé à côté du deuxième module de caméra (11), sa direction d'émission traversant l'écran pare-lumière (10) vers le pare-brise (3).

6. Système de caméra (1) selon l'une quelconque des revendications précédentes,
**caractérisé**
**en ce que** le deuxième module de caméra (11) et/ou ledit au moins un éclairage actif (22) détecte et/ou émet un rayonnement électromagnétique au travers d'une zone évidée (19) dans l'écran pare-lumière (10).

7. Système de caméra (1) selon la revendication 6,
**caractérisé**
**en ce qu'**au moins un élément optique (21) est disposé dans au moins une zone évidée (19) de l'écran pare-lumière (10) .

8. Système de caméra (1) selon l'une quelconque des revendications 1 à 5,
**caractérisé**
**en ce que** le deuxième module de caméra (11) et/ou ledit au moins un éclairage actif (22) détecte et/ou émet un rayonnement électromagnétique au travers d'une zone partielle de l'écran pare-lumière (10), laquelle est prévue perméable au rayonnement électromagnétique.

9. Système de caméra (1) selon la revendication 8,
**caractérisé**
**en ce qu'**au moins une des zones partielles de l'écran pare-lumière (10) prévues perméables au rayonnement électromagnétique est prévue perméable au rayonnement électromagnétique d'une plage de longueurs d'onde définie.

10. Système de caméra (1) selon l'une quelconque des revendications précédentes,
**caractérisé**
**en ce que** le premier et le deuxième module de caméra (11) sont disposés sur un circuit imprimé commun, ledit circuit imprimé étant un circuit imprimé souple,
- avec une première zone plane perpendiculaire à l'axe optique (7) du premier module de caméra,
- une deuxième zone plane en dessous de l'écran pare-lumière (10), et
- une zone incurvée reliant la première et la deuxième zones planes est configurée,
le premier module de caméra étant disposé sur la première zone plane du circuit imprimé souple, et
le deuxième module de caméra (11) étant disposé sur la deuxième zone plane du circuit imprimé souple.

11. Système de caméra (1) selon l'une quelconque des revendications 1 à 9,
**caractérisé**
**en ce que** le premier module de caméra est disposé sur un premier circuit imprimé (8), et le deuxième module de caméra (11) sur un deuxième circuit imprimé (15),
le deuxième circuit imprimé (15) étant disposé en dessous de l'écran pare-lumière (10) et étant relié au premier circuit imprimé (8) par des contacts flexibles (16).

12. Système de caméra (1) selon l'une quelconque des revendications précédentes,
**caractérisé**
**en ce que** le deuxième module de caméra (11) est intégré à l'écran pare-lumière (10), et quand l'écran pare-lumière (10) est disposé dans le système de caméra (1)
- une connexion mécanique est réalisée entre l'écran pare-lumière (10) et le boîtier (2) du système de caméra (1),
et
- une liaison électrique directe ou indirecte est réalisée entre le deuxième module de caméra (11) et le circuit imprimé (8) sur lequel est disposé le premier module de caméra.

13. Système de caméra (1) selon l'une quelconque des revendications précédentes,
**caractérisé**
**en ce que** le premier et le deuxième module de caméra (11) utilisent des dispositifs électroniques (20) communs pour le traitement des données d'image détectées.

14. Système de caméra (1) selon l'une quelconque des revendications précédentes,
**caractérisé**
**en ce que** le deuxième module de caméra (11) comporte une direction de visée non perpendiculaire à la zone détectée (18) du pare-brise (3), si bien que le deuxième module de caméra (11) ne représente par focalisation qu'une zone partielle de toute la zone (18) du pare-brise (3) détectée par le deuxième module de caméra.
